# EUROPEAN PATENT SPECIFICATION

(11) **EP 1 460 780 B1**
(45) Date of publication and mention of the grant of the patent: **26.10.2005**
(21) Application number: 04006101.2
(22) Date of filing: 15.03.2004
(51) Int. Cl.: H04B 7/08, H01Q 1/32

(54) **Antenna apparatus and electronic equipment having antenna apparatus**
Antennenanordnung und damit ausgerüstetes elektronisches Gerät
Dispositif d'antenne et èquipement électronique avec dispositif d'antenne

(30) Priority: 17.03.2003 JP 2003072029
(43) Date of publication of application: 22.09.2004
(73) Proprietor: SHARP KABUSHIKI KAISHA, Osaka-shi, Osaka 545-8522 (JP)
(72) Inventor: Hirata, Kouzou, Osaka-shi Osaka 540-0037 (JP)
(74) Representative: Müller - Hoffmann & Partner

(56) References cited:
- EP-A- 0 676 870
- EP-A- 0 718 986
- EP-A- 1 109 249
- US-A- 5 341 301
- US-A- 5 379 449
- GODARA L C: "APPLICATIONS OF ANTENNA ARRAYS TO MOBILE COMMUNICATIONS, PART I: PERFORMANCE IMPROVEMENT, FEASIBILITY, AND SYSTEM CONSIDERATIONS" PROCEEDINGS OF THE IEEE, IEEE. NEW YORK, US, vol. 85, no. 7, 1 July 1997 (1997-07-01), pages 1031-1060, XP000735330 ISSN: 0018-9219

## Description

### BACKGROUND OF INVENTION

This application claims priority to Patent Application No. 2003-072029 filed in JAPAN on March 17, 2003.

The present invention pertains to antenna apparatus(es) and to electronic equipment equipped with antenna apparatus(es); in particular, the present invention pertains to antenna apparatus(es) favorably used in portable DVD apparatuses, car navigation apparatuses, and other apparatuses such as might be equipped with video display apparatuses and terrestrial digital broadcast receivers (tuners) intended for automobiles or other such mobile bodies, and to electronic equipment equipped with antenna apparatus(es).

There has in recent years been increased demand for in-vehicle television receivers and for television-receiving antennas such as will permit viewing of terrestrial television broadcasts within leisure-type automobiles while such vehicles are in motion.

Because the direction in which an automobile in motion moves changes as the automobile follows the road, diversity antennas are in most cases typically employed as television-receiving antennas for the analog broadcasts currently in use. These are equipped with a plurality of receiving antennas, the receiving antenna thereamong having the highest signal strength being selected and used to receive the television broadcast. Such diversity antennas have been described in EP-A-0676870, US-A-5379449, and US-A-5341301.

Furthermore, as conventional art for receiving signals without regard to the direction of movement of the automobile or other such mobile body, an omnidirectional "combined U/V TV receiving antenna" has been proposed (see, e.g., Japanese Patent Application Publication Kokai No. 2000-232316).

This "combined U/V TV receiving antenna" comprises a first antenna region and a second antenna region-these being of identical construction and being arranged in perpendicular fashion so as to share a common center-and a circuit region supplying electrical power to the first antenna region and the second antenna region with a 90° difference in phase; the first antenna region and the second antenna region each comprise UHF-band element region(s) and a pair of VHF-band element regions provided at either end in the axial direction of the UHF-band element region(s); the VHF-band element regions contain one or more wave-guiding elements operating in the UHF-band; and the tip(s) in the axial direction of the UHF-band element region(s) and the inside end(s) in the axial direction of the VHF-band element region(s) are connected by loading coil(s).

Moreover, the analog broadcasts used for terrestrial television broadcasts will in the not too distant future be replaced with digital broadcasts; and orthogonal frequency division multiplexing (OFDM) will be introduced for terrestrial digital broadcasts. Under this OFDM, multiple narrowband modulated signals are transmitted in parallel by means of frequency modulation using mutually orthogonal carriers, the entirety being transmitted as a wideband digital signal.

Now, in order to accommodate this OFDM, a "receiver and receiving method" for a mobile body, which uses a plurality of antennas for reception, has been proposed (see, e.g., Japanese Patent Application Publication Kokai No. 2000-183844).

This "receiver and receiving method," in the context of an orthogonal-frequency-division-multiplex-type receiver receiving and demodulating a transmitted signal multiplexed by means of orthogonal frequency division multiplexing, is characterized in that it is provided with receiving means for receiving the transmitted data through use of a plurality of receiving antennas; weighting factor calculating means for calculating weighting factor(s) from a plurality of received signals received by the receiving means; multiplying means for multiplying a plurality of received signals received by the receiving means with the weighting factor(s); first adding means for determining sum(s) of product(s) determined by the multiplying means; and demodulating means for carrying out orthogonal frequency division multiplex demodulation of signal(s) containing sum(s) determined by the first adding means.

It is said that one advantage of the OFDM technique to be introduced for terrestrial digital broadcasts is that its robustness with respect to multipath fading should make it well-suited for mobile body reception. On the other hand, its poor resilience with respect to phase noise has been cited as a disadvantage.

This phase noise is produced in accompaniment to motion of the mobile body when the receiving antenna is perpendicular to the direction in which the wave propagates from the broadcast tower. This is due to a Doppler shift effect in which the frequency of the propagating wave fluctuates depending upon the speed of the mobile body.

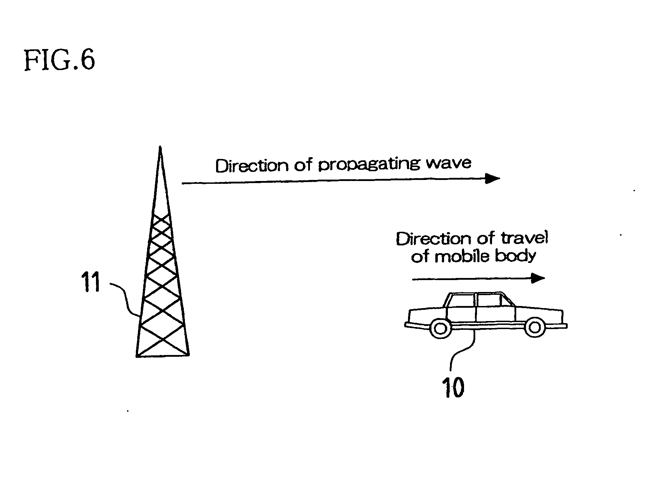

FIG. 6 is a schematic diagram of the relationship between the direction of a wave propagating from broadcast tower 11 and the direction of travel of mobile body 10 at a time when the direction of propagation of the wave is the same as the direction in which the mobile body travels, as viewed by an observer located to the side of mobile body 10.

Suppose, as shown in FIG. 6, that the direction of the broadcast propagating wave transmitted from broadcast tower 11 is the same as the direction of travel of mobile body 10, and mobile body 10 is traveling in a direction causing it to recede from broadcast tower 11. Whether there will be a Doppler shift depends not on the relationship between the direction of the propagating wave and the direction of travel of the mobile body, but on the relationship between the direction of the propagating wave and the orientation of the receiving antenna.

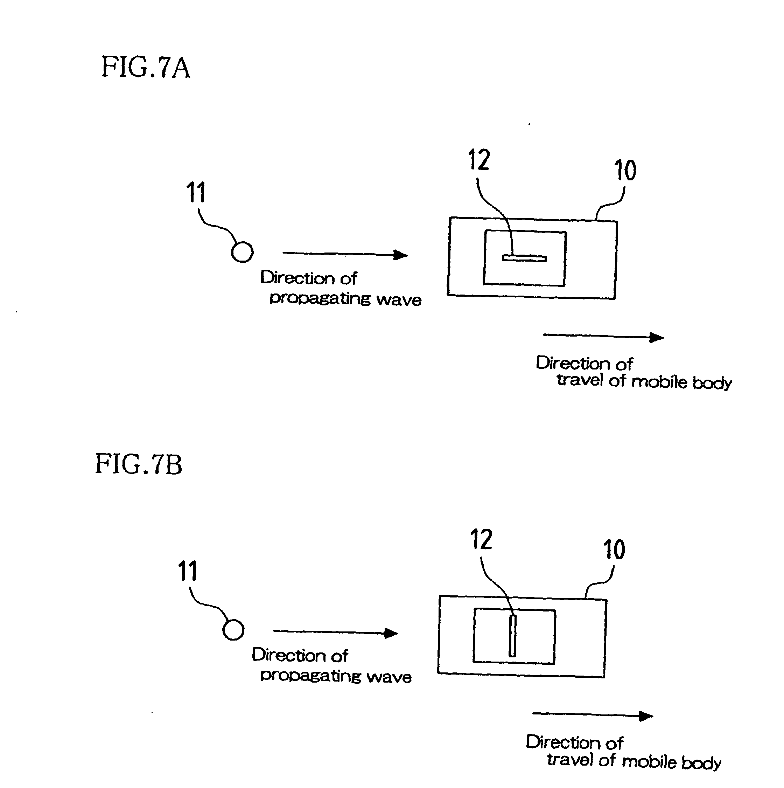

FIG. 7A and 7B are schematic diagrams, as viewed from above mobile body 10, of the relationship among the direction of a wave propagating from broadcast tower 11, the direction of travel of mobile body 10, and the mounted orientation of receiving antenna 12, at a time when the direction of the propagating wave is the same as the direction of travel of mobile body 10; FIG. 7A showing the situation existing when the mounted orientation of receiving antenna 12 is parallel to the direction of travel of mobile body 10, and FIG. 7B showing the situation existing when the mounted orientation of receiving antenna 12 is perpendicular to the direction of travel of mobile body 10.

As shown at FIG. 7A, when the mounted orientation of receiving antenna 12 is parallel to the direction of travel of mobile body 10, because the orientation of receiving antenna 12 is also parallel to the direction of the propagating wave, Doppler shifting of the propagating wave does not occur.

But as shown at FIG. 7B, when the mounted orientation of receiving antenna 12 is perpendicular to the direction of travel of mobile body 10, the orientation of receiving antenna 12 is also perpendicular to the direction of the propagating wave. This being the case, Doppler shifting of the propagating wave will occur depending upon the speed at which mobile body 10 moves, causing the frequency of the propagating wave to vary and producing phase noise.

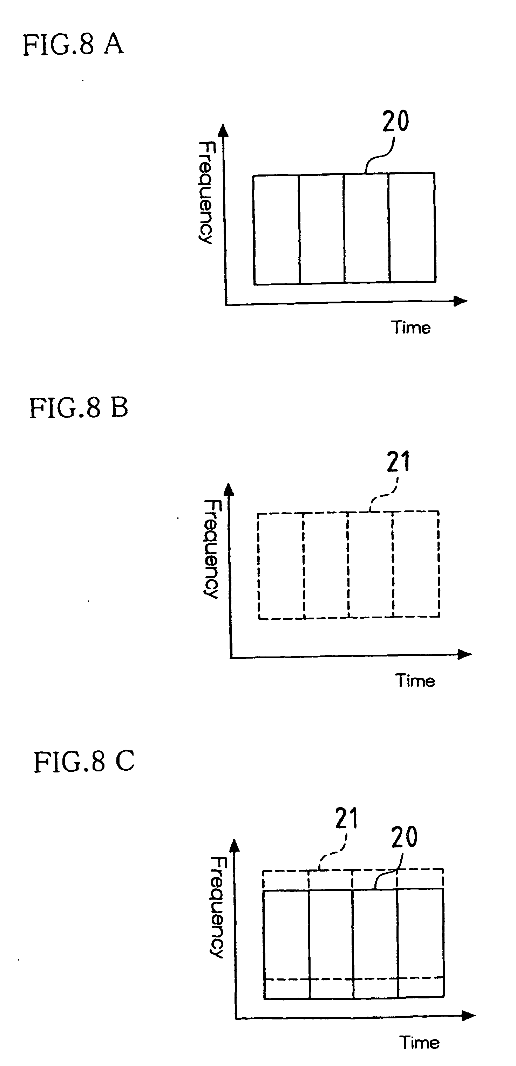

FIG. 8A through 8C are schematic diagrams for explaining the effect of Doppler shifting as it might affect a conventional-broadcast propagating wave; FIG. 8A showing only the fundamental propagating wave 20; FIG. 8B showing only the Doppler-shifted propagating wave 21; and FIG. 8C showing the combination of the two propagating waves, this in fact being the propagating wave which is actually received.

As shown at FIG. 8A, taking the vertical axis to be frequency and taking the horizontal axis to be time, conventional-broadcast fundamental propagating wave 20 may be represented by vertically long rectangular regions. The height in the vertical direction of a rectangular region represents the band of frequencies occupied thereby, and the width in the horizontal direction of a rectangular region represents one symbol period. Note moreover at this FIG. 8A that what is shown is the propagating wave in time series fashion for 4 symbol periods, the four rectangular regions being situated adjacent to one another in the direction of the horizontal (time) axis.

Because, in the case of Doppler-shifted propagating wave 21, the frequency of the propagating wave is subject to variation, the rectangular regions corresponding to the propagating wave are, as shown at FIG. 8B, shifted slightly in only the direction of the vertical (frequency) axis relative to fundamental propagating wave 20 shown at FIG. 8A.

The propagating wave actually received at the receiving antenna is the combination of fundamental propagating wave 20 and Doppler-shifted propagating wave 21; and as shown at FIG. 8C, the respective rectangular regions corresponding to fundamental propagating wave 20 and Doppler-shifted propagating wave 21 overlap so as to be shifted slightly in only the direction of the vertical (frequency) axis. Because there is no shifting in the direction of the horizontal (time) axis, there is no overlapping between rectangular regions of adjacent symbol periods.

Conventional broadcasts being of the single-carrier transmission type, the fact that there is a wide band of frequencies in a single channel of the propagating wave has meant that, even where there is some shifting of frequency due to Doppler shifting, propagating wave regions corresponding to the same symbol will for the most part overlap. Furthermore, there being no overlapping of propagating wave regions corresponding to different symbols, interference did not occur.

This is why the reception technique that has come to be ordinarily employed is the diversity technique wherein the antenna which of two antennas is the one having greater signal strength is selected.

However, as mentioned above, OFDM is such that, for transmission of a single channel, multiple narrowband modulated signals are transmitted in parallel by means of frequency multiplex using mutually orthogonal carriers, a wideband digital transmission being performed in total. A characteristic thereof is the fact that the frequency gap between adjacent subchannels in the frequency domain is narrow.

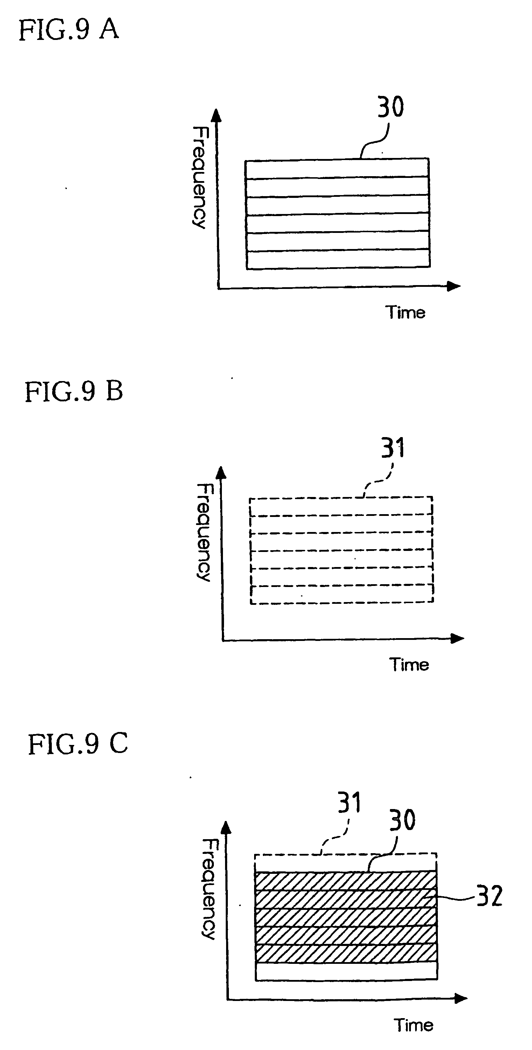

FIG. 9A through 9C are schematic diagrams for explaining the effect of Doppler shifting as it might affect an OFDM-broadcast propagating wave; FIG. 9A showing only the fundamental propagating wave 30; FIG. 9B showing only the Doppler-shifted propagating wave 31; and FIG. 9C showing the combination of the two propagating waves, this in fact being the propagating wave which is actually received.

As shown at FIG. 9A, taking the vertical axis to be frequency and taking the horizontal axis to be time, OFDM-broadcast fundamental propagating wave 30 may be represented by a plurality of horizontally long rectangular regions situated adjacent to one another in the direction of the vertical axis. The height in the vertical direction of one of the rectangular regions represents the band of frequencies occupied by one of the subchannels by means of which transmission is being carried out in parallel, and the width in the horizontal direction of a rectangular region represents one symbol period. Moreover, with OFDM, because the length of a single symbol period is greater than would be the case under conventional single-carrier transmission, what is shown at FIG. 9A is only the propagating wave during a single symbol period

Because, in the case of Doppler-shifted propagating wave 31, the frequency of the propagating wave is subject to variation, the rectangular regions corresponding to the propagating wave are, as shown at FIG. 9B, shifted slightly in only the direction of the vertical (frequency) axis relative to fundamental propagating wave 30 shown at FIG. 9A. Here, the amount of such shifting is equivalent to the amount of shifting affecting the conventional-broadcast Doppler-shifted propagating wave 21 shown at FIG. 8B.

The propagating wave actually received at the receiving antenna is the combination of fundamental propagating wave 30 and Doppler-shifted propagating wave 31; and as shown at FIG. 9C, the respective rectangular regions corresponding to fundamental propagating wave 30 and Doppler-shifted propagating wave 31 overlap so as to be shifted in only the direction of the vertical (frequency) axis.

Unlike the conventional-broadcast propagating wave shown at FIG. 8C, with OFDM the frequency gap between adjacent subchannels in the frequency domain by means of which transmission is being carried out in parallel is narrow. This being the case, as shown at FIG. 9C, Doppler shifting of the propagating waves at respective subchannels carrying out parallel transmission causes rectangular regions that are adjacent in the direction of the vertical (frequency) axis to mutually overlap as indicated by hatched region 32. That is, Doppler shifting of the propagating wave causes interference to occur between subchannels that are adjacent in the frequency domain. This consequently disturbs intercarrier orthogonality, leading to deterioration in transmission characteristics; and where this occurs to marked extent, reception may be difficult.

Since the problem is not in the strength of the received signal, it has not been possible to avoid the effects of interference resulting from Doppler shifting through use of the diversity technique, in which an antenna is selected based on relative received signal strength.

### SUMMARY OF INVENTION

It is an object of the present invention to provide an antenna apparatus which inhibits the effect of Doppler shifting occurring when a mobile body receives OFDM broadcast(s).

An antenna apparatus in accordance with one or more embodiments of the present invention is capable of being installed at a mobile body, the antenna apparatus comprising a plurality of receiving antennas; an antenna switching means for switching each of the plurality of receiving antennas between a connected state and a disconnected state respectively; and a control means for controlling switching by the antenna switching means based on the direction in which, and the speed at which, the mobile body moves relative to the direction of propagation of at least one propagating wave of at least one received signal.

Antenna apparatus(es) in accordance with such embodiment(s) of the present invention may be such that determination is made as to whether there is occurrence of Doppler shifting based on the direction in which, and the speed at which, the mobile body moves relative to the direction of propagation of propagating wave(s) of received signal(s). That is, it may be determined that Doppler shifting occurs when the mobile body moves while orientation(s) of receiving antenna(s) mounted at the mobile body is/are perpendicular to the direction of propagation of received signal(s). Conversely, it may be determined that Doppler shifting does not occur despite movement of the mobile body if orientation(s) of receiving antenna(s) mounted at the mobile body is/are parallel to direction(s) of propagation of received signal(s). Moreover, control of switching a plurality of receiving antennas at time(s) when it is determined that Doppler shifting is occurring may make it possible to maintain state(s) in which receiving antenna(s) actually used to receive signal(s) is/are substantially stationary relative to source(s) of transmission of received signal(s).
This would make it possible to inhibit occurrence of Doppler shifting, permitting good reception even when the mobile body is moving.

Furthermore, in antenna apparatus(es) in accordance with one or more embodiments of the present invention, the plurality of receiving antennas may be such that the receiving antennas are arranged so as to be respectively parallel and more or less evenly spaced apart.

Antenna apparatus(es) in accordance with such embodiment(s) of the present invention make it possible to facilitate arrangement of the plurality of receiving antennas.

Furthermore, antenna apparatus(es) in accordance with one or more embodiments of the present invention may be such that the antenna switching means supplies electrical power to the receiving antenna or antennas each of which is switched to a connected state by the control means.

Antenna apparatus(es) in accordance with such embodiment(s) of the present invention make it possible to supply electrical power only to receiving antenna(s) which is/are actually necessary. This makes it possible to reduce electrical power consumption.

Furthermore, antenna apparatus(es) in accordance with one or more embodiments of the present invention may be such that the antenna switching means simultaneously switches one or more of the receiving antennas to a connected state respectively in accordance with controlling by the control means.

Antenna apparatus(es) in accordance with such embodiment(s) of the present invention make it possible, through use of any arbitrary one among a plurality of receiving antennas and/or through simultaneous use of any arbitrary two or more thereof as may be required, to flexibly select the manner in which a plurality of receiving antennas will be used. This makes it possible to achieve good reception in correspondence to circumstances.

Furthermore, antenna apparatus(es) in accordance with one or more embodiments of the present invention may be such that the difference between the direction in which the mobile body moves and the direction of propagation of at least one of the propagating wave or waves is detected based on transmitter position information for at least one of the propagating wave or waves and current position information for the mobile body.

Here, as current position information, if equipment external to antenna apparatus(es) possesses position information detection system(s) (e.g., global positioning system(s)), current position information might be obtained from such equipment; or position information detection system(s) may be provided internal to antenna apparatus(es). Furthermore, the difference between the direction in which the mobile body moves and the direction of propagation of at least one of the propagating wave or waves refers to the vector difference relative to the direction of propagation of at least one of the propagating wave or waves; e.g., whether such directions are mutually perpendicular, or whether such directions are mutually parallel.

Antenna apparatus(es) in accordance with such embodiment(s) of the present invention make it possible, by virtue of transmitter position information for propagating wave(s) and current position information for a mobile body, to constantly and accurately be able to detect the difference between the direction in which the mobile body moves and the direction of propagation of at least one of the propagating wave or waves. This makes it possible to carry out appropriate control of switching of receiving antenna(s), permitting good reception.

Furthermore, antenna apparatus(es) in accordance with one or more embodiments of the present invention may be such that at least one antenna switching technique employed by the control means is altered in correspondence to whether the difference between the direction in which the mobile body moves and the direction of propagation of at least one of the propagating wave or waves is within at least one prescribed range.

Here, the difference between the direction in which the mobile body moves and the direction of propagation of at least one of the propagating wave or waves refers, as has already been mentioned, to the vector difference relative to the direction of propagation of at least one of the propagating wave or waves. In practice, the vector difference is not limited to the parallel and perpendicular cases, there being states which are intermediate with respect thereto. A reference value is therefore established for deeming that same are perpendicular even when not exactly perpendicular, provided that the difference is within a prescribed angle from the perpendicular state. Moreover, whether to treat same as perpendicular or as parallel may be determined based on whether the vector difference obtained is within the reference value range. Furthermore, while a number of techniques may be contemplated for antenna switching, one example that may be cited is a technique, similar to the diversity technique of the conventional art, in which a plurality of receiving antennas are switched to a connected state respectively and supply of electrical power are made to those receiving antennas, and receiving is carried out by selecting the receiving antenna thereamong having the highest signal strength. Another technique that may be cited is selecting only one from among a plurality of receiving antennas to be switched to a connected state and be supplied of electrical power, and sequentially switching to different receiving antenna as necessary; but the present invention is not limited to these techniques.

Antenna apparatus(es) in accordance with such embodiment(s) of the present invention make it possible to carry out reception with selection of appropriate antenna switching technique(s) in correspondence to the direction in which a mobile body moves relative to the direction of propagation of propagating wave(s). This makes it possible to always be able to carry out satisfactory reception regardless of the direction in which the mobile body moves.

Furthermore, antenna apparatus(es) in accordance with one or more embodiments of the present invention may be such that at least one antenna switching rate at the control means is controlled in correspondence to the direction of the mobile body in the direction of propagation of at least one of the propagating wave or waves. Moreover, at least one antenna switching rate at the control means may be controlled so as to be at least one switching rate such as will cause the connected receiving antenna or antennas to be substantially stationary relative to at least one source of transmission of at least one of the propagating wave or waves.

Antenna apparatus(es) in accordance with such embodiment(s) of the present invention make it possible to cause the receiving antenna actually used for reception to be substantially stationary, relatively speaking, with respect to a source of transmission of received signal(s) despite the fact that the mobile body may itself be moving. This makes it possible to inhibit occurrence of Doppler shifting, permitting good reception.

Furthermore, antenna apparatus(es) in accordance with one or more embodiments of the present invention may be such that the plurality of receiving antennas and the antenna switching means are formed in integrated circuit fashion. Alternatively, the plurality of receiving antennas and the control means may be formed in integrated circuit fashion. Alternatively, the antenna switching means and the control means may be formed in integrated circuit fashion. Alternatively, the plurality of receiving antennas, the antenna switching means, and the control means may be formed in integrated circuit fashion.

Furthermore, antenna apparatus(es) in accordance with one or more embodiments of the present invention may be such that the antenna apparatus(es) is/are capable of being used to receive one or more signals employing orthogonal frequency division multiplexing.

Antenna apparatus(es) in accordance with such embodiment(s) of the present invention make it possible to carry out good reception of orthogonal-frequency-division-multiplexed signal(s) even while moving.

Alternatively or in addition thereto, electronic equipment in accordance with one or more embodiments of the present invention may be electronic equipment that is provided with one or more antenna apparatuses as described above. Note that the present invention is not limited to embodiments in which there is only one antenna apparatus provided at such electronic equipment; it being possible for a plurality thereof to be provided thereat

Here, as electronic equipment, while portable DVD apparatuses, car navigation apparatuses, and other apparatuses such as might be equipped with video display apparatuses and terrestrial digital broadcast receivers (tuners) intended for a mobile body may be cited as examples, the present invention is not limited thereto.

Electronic equipment provided with antenna apparatus(es) in accordance with such embodiment(s) of the present invention makes it possible to carry out good reception even while moving, increasing usefulness of such electronic equipment.

### BRIEF DESCRIPTION OF DRAWINGS

FIG. 1 is a block diagram showing the schematic constitution of an embodiment of an antenna apparatus in accordance with the present invention.

FIG. 2 is a schematic diagram showing constitution and positional relationships at a receiving antenna array of an antenna apparatus.

FIG. 3A is a schematic diagram of the relationship between the direction of travel of a mobile body and the mounted orientation of a receiving antenna array, as viewed from above the mobile body; the situation shown being that which might exist when the mounted orientation of the receiving antenna array is parallel to the direction of travel of the mobile body.

FIG. 3B is a schematic diagram of the relationship between the direction of travel of a mobile body and the mounted orientation of a receiving antenna array, as viewed from above the mobile body; the situation shown being that which might exist when the mounted orientation of the receiving antenna array is perpendicular to the direction of travel of the mobile body.

FIG. 4A is a schematic diagram of the relationship between the direction of travel of a mobile body and the direction of a wave propagating from a broadcast tower, as viewed from above the mobile body; the situation shown being that which might exist when the direction of travel of the mobile body is perpendicular to the direction of the propagating wave.

FIG. 4B is a schematic diagram of the relationship between the direction of travel of a mobile body and the direction of a wave propagating from a broadcast tower, as viewed from above the mobile body; the situation shown being that which might exist when the direction of travel of the mobile body is parallel to the direction of the propagating wave.

FIG. 5A is a block diagram showing the schematic constitution of another embodiment of the present invention, a situation in which two antenna apparatuses are connected to external equipment being shown.

FIG. 5B is a block diagram showing the schematic constitution of another embodiment of the present invention, a situation in which a plurality of antenna apparatuses are connected to external equipment being shown.

FIG. 6 is a schematic diagram of the relationship between the direction of a wave propagating from a broadcast tower and the direction of travel of a mobile body at a time when the direction of propagation of the wave is the same as the direction in which the mobile body travels, as viewed by an observer located to the side of mobile body.

FIG. 7A is a schematic diagram, as viewed from above a mobile body, of the relationship among the direction of a wave propagating from a broadcast tower, the direction of travel of the mobile body, and the mounted orientation of a receiving antenna; the situation shown being that which might exist when the direction of the propagating wave is the same as the direction of travel of the mobile body, and the mounted orientation of the receiving antenna is parallel to the direction of travel of the mobile body.

FIG. 7B is a schematic diagram, as viewed from above a mobile body, of the relationship among the direction of a wave propagating from a broadcast tower, the direction of travel of the mobile body, and the mounted orientation of a receiving antenna; the situation shown being that which might exist when the direction of the propagating wave is the same as the direction of travel of the mobile body, and the mounted orientation of the receiving antenna is perpendicular to the direction of travel of the mobile body.

FIG. 8A is a schematic diagram for explaining the effect of Doppler shifting as it might affect a conventional-broadcast propagating wave, only the fundamental propagating wave being shown.

FIG. 8B is a schematic diagram for explaining the effect of Doppler shifting as it might affect a conventional-broadcast propagating wave, only the Doppler-shifted propagating wave being shown.

FIG. 8C shows the combination of the propagating waves at FIG. 8A and FIG. 8B, this in fact being the propagating wave which is actually received.

FIG. 9A is a schematic diagram for explaining the effect of Doppler shifting as it might affect an OFDM-broadcast propagating wave, only the fundamental propagating wave being shown.

FIG. 9B is a schematic diagram for explaining the effect of Doppler shifting as it - might affect an OFDM-broadcast propagating wave, only the Doppler-shifted propagating wave being shown.

FIG. 9C shows the combination of the propagating waves at FIG. 9A and FIG. 9B, this in fact being the propagating wave which is actually received.

### DESCRIPTION OF PREFERRED EMBODIMENTS

Below, embodiments of the present invention are described with reference to the drawings. While the present invention is here applied to a terrestrial digital broadcast receiving antenna array apparatus for automobiles and other such mobile bodies, the present invention is not limited thereto.

### STRUCTURE OF APPARATUS

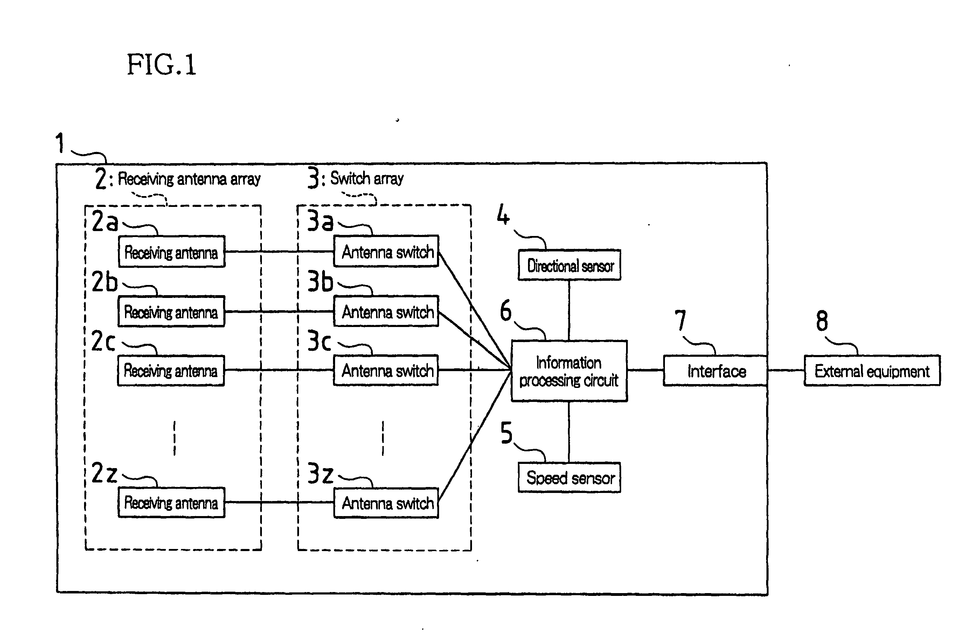

FIG. 1 is a block diagram showing the schematic constitution of an embodiment of antenna apparatus 1 in accordance with the present invention.

As shown in FIG. 1, antenna apparatus 1 comprises receiving antenna array 2 having a plurality of receiving antennas 2a through 2z; switch array 3 (antenna switching means and/or antenna switching device) having a plurality of antenna switches 3a through 3z; directional sensor 4 detecting the direction in which a mobile body (e.g., automobile) moves; speed sensor 5 detecting the speed at which the mobile body moves; information processing circuit 6 (control means and/or control device) controlling switching of switch array 3; and interface 7 mediating connection(s) with car navigation apparatus or other such external equipment 8.

While switch array 3 here incorporates a plurality of semiconductor switches, the present invention is not limited thereto; it being possible, for example, to instead employ a plurality of switches, a switching circuit, and/or the like. Information processing circuit 6 may, for example, be a control circuit, a CPU, or the like. Furthermore, such switch array 3 and/or information processing circuit 6 may take the form of integrated circuit(s) or may be made up of combination(s) of composite component(s) such as IC(s) and/or discrete component(s).

Furthermore, antenna switches 3a through 3z which are present at switch array 3 respectively exist in one-to-one correspondence with receiving antennas 2a through 2z which are present at receiving antenna array 2. For example, antenna switch 3a causes switching between a state in which receiving antenna 2a is connected to information processing circuit 6 and a state in which receiving antenna 2a is disconnected from information processing circuit 6. Similarly, antenna switch 3b causes switching between a state in which receiving antenna 2b is connected to information processing circuit 6 and a state in which receiving antenna 2b is disconnected from information processing circuit 6, and antenna switch 3z causes switching between a state in which receiving antenna 2z is connected to information processing circuit 6 and a state in which receiving antenna 2z is disconnected from information processing circuit 6. Electrical power is supplied to connected receiving antenna(s). Connection(s) between information processing circuit 6 and receiving antennas 2a through 2z may be such that connection is limited to only a single receiving antenna, or may be such that connection is simultaneously made to a plurality of receiving antennas. Note that control of such switching taking place at switch array 3 is carried out based on control signal(s) output by information processing circuit 6, described below.

External equipment 8-being, for example, a car navigation apparatus-has, provided at the interior of the apparatus, a global positioning system (GPS) and is capable of detecting absolute global position information. Absolute position information detected by GPS and various other information is sent to information processing circuit 6 by way of interface 7. Moreover, if, for example, external equipment 8 is here taken to be a car navigation apparatus, antenna apparatus 1 and external equipment 8 may be formed in integral fashion such that there is a single piece of electronic equipment, this being the car navigation apparatus.

Directional sensor 4 is a sensor that detects the direction in which the mobile body moves, the results of detection being sent to information processing circuit 6. Moreover, with regard to directional sensor 4, if external equipment 8 is equipped with a directional sensor, the output of that directional sensor may be sent to information processing circuit 6 by way of interface 7. Alternatively, the direction in which the mobile body moves may be calculated from the temporal variation in the absolute position information detected by external equipment 8.

Speed sensor 5 is a sensor that detects the speed at which the mobile body moves, the results of detection being sent to information processing circuit 6. Moreover, with regard to speed sensor 5, the constitution may be such that the speed sensor for speedometer display which would ordinarily be provided at the automobile or other such mobile body may be employed, output signal(s) from that speed sensor being input at information processing circuit 6; or speed sensor(s) may be provided independently therefrom.

Information processing circuit 6 carries out control for the entire antenna apparatus 1; and as described above, the direction in which the mobile body moves is sent thereto from directional sensor 4, and the speed at which the mobile body moves is sent thereto from speed sensor 5. Furthermore, absolute position information and various other information is sent thereto from external equipment 8 by way of interface 7. Based on such information, information processing circuit 6 calculates the direction in which, and the speed at which, the mobile body is moving relative to the direction of propagation of the propagating wave of the received signal(s), and outputs control signals that controls switching of receiving antenna(s) at switch array 3 in correspondence to the results of that calculation.

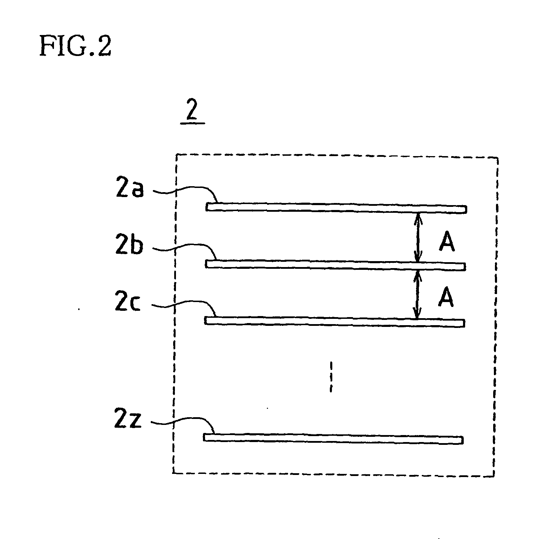

FIG. 2 is a schematic diagram showing constitution and positional relationships at receiving antenna array 2 of antenna apparatus 1 which is constituted as described above.

As shown in FIG. 2, receiving antenna array 2 is such that a plurality of receiving antennas 2a through 2z of identical rod-like shape are arranged in a single plane such that they are mutually parallel and have constant pitch A therebetween. Note, however, that the receiving antennas are not limited to being rod-like in shape.

### DESCRIPTION OF OPERATION OF APPARATUS

Operation of antenna apparatus 1 constituted as described above will now be described

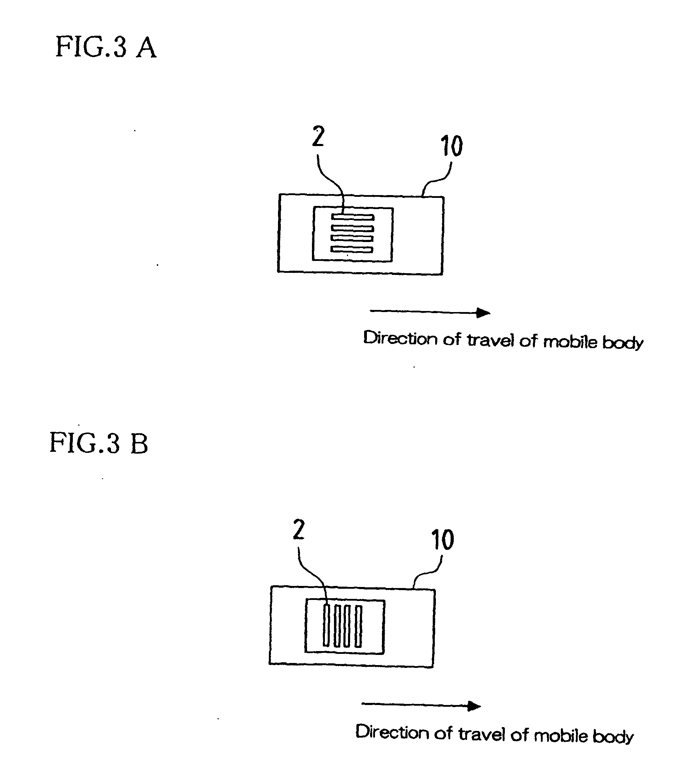

FIG. 3A and 3B are schematic diagrams, as viewed from above mobile body 10, of the relationship between the direction of travel of mobile body 10 and the mounted orientation of receiving antenna array 2; FIG. 3A showing the situation existing when the mounted orientation of receiving antenna array 2 is parallel to the direction of travel of mobile body 10, and FIG. 3B showing the situation existing when the mounted orientation of receiving antenna array 2 is perpendicular to the direction of travel of mobile body 10.

Note that while receiving antenna array 2 is, for reasons of simplification of the drawings, depicted as being made up of four receiving antennas, the present invention is not limited to constitutions in which there are four thereof.

Broadly speaking, there are two scenarios that might be envisioned with respect to attachment of receiving antenna array 2 to mobile body 10. These are the situation that exists when the respective receiving antennas of receiving antenna array 2 are mounted in such fashion as to cause them to be parallel to the direction of travel of mobile body 10 as shown at FIG. 3A, and the situation that exists when the respective receiving antennas thereof are mounted in such fashion as to cause them to be perpendicular to the direction of travel of mobile body 10 as shown at FIG. 3B.

As has already been described with reference to FIG. 7A and 7B, whether movement of the mobile body will cause occurrence of a Doppler shift depends upon the relationship between the direction of propagation of the propagating wave and the orientation of the receiving antenna(s).

A user therefore initially employs an actuatable member, not shown, to input whether the mounted orientation of receiving antenna array 2 previously attached to mobile body 10 is parallel to the direction of travel of mobile body 10 or is perpendicular thereto.

This makes it possible to detect the relationship between the direction of propagation of the propagating wave and the orientation of receiving antenna array 2 based on the relationship between the direction of propagation of the propagating wave and the direction of travel of the mobile body.

Moreover, the mounted orientation of receiving antenna array 2 is fixed, being either parallel to the direction of travel of mobile body 10 or perpendicular thereto, once receiving antenna array 2 has been attached. This information may therefore be stored at information processing circuit 6 of antenna apparatus 1 at the time that the receiving antenna array 2 is attached. If this is done, it will be unnecessary for the user to input information regarding mounted orientation of receiving antenna array 2.

For the purpose of the following description, it will be assumed that the mounted orientation of receiving antenna array 2 is perpendicular to the direction of travel of the mobile body. Moreover, because all that need be done in the event that the mounted orientation of receiving antenna array 2 is parallel to the direction of travel of the mobile body is to include the difference in orientation when calculating the vector difference (described below) between the direction in which mobile body 10 moves and the direction of the propagating wave directed toward mobile body 10 from the broadcast tower, description thereof will be omitted.

In addition, the user previously obtains position information for the broadcast tower emitting the terrestrial digital broadcast signal, the user inputting this by means of an actuatable member, not shown, present at the car navigation apparatus or other such external equipment 8 (see FIG. 1).

The broadcast tower position information input here is sent to information processing circuit 6 (see FIG. 1) of antenna apparatus 1 by way of interface 7 (see FIG. 1) together with absolute position information for mobile body 10 obtained by means of the GPS incorporated within external equipment 8.

This makes it possible for information processing circuit 6 to calculate the direction of the propagating wave directed toward mobile body 10 from the broadcast tower based on the absolute position information for mobile body 10 and the position information for the broadcast tower sent thereto from external equipment 8.

Moreover, because antenna apparatus 1 is equipped with directional sensor 4 (see FIG. 1), it is possible to detect the direction in which mobile body 10 moves; and the results of detection by directional sensor 4 of the direction in which mobile body 10 moves are sent to information processing circuit 6.

Accordingly, information processing circuit 6 can calculate the vector difference between the direction in which mobile body 10 moves and the direction of the propagating wave directed toward mobile body 10 from the broadcast tower.

Furthermore, because terrestrial digital broadcast tower position is fixed once receive locale(s) and receive channel(s) are known, these three items forming a set, broadcast tower position information may be previously stored at external equipment 8 in the form of such sets. Because receive locale can be identified based on absolute position information obtainable by means of the GPS incorporated within external equipment 8, broadcast tower position information corresponding to receive channel(s) can be automatically selected from among stored sets of broadcast tower position information. If this is done, it will be unnecessary for the user to input broadcast tower position information.

Next, actual control of switching of receiving antenna array 2 will be described.

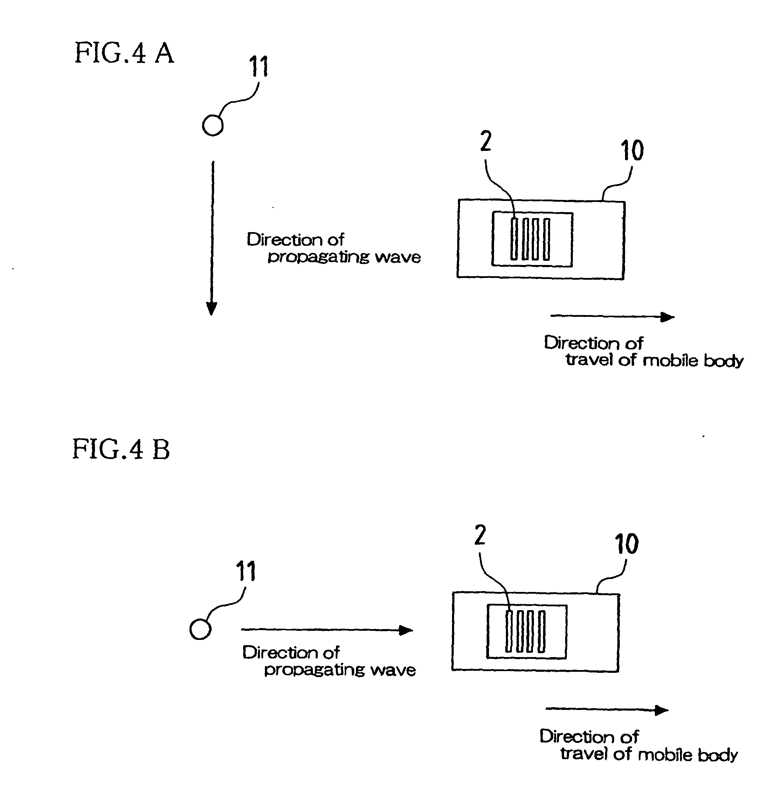

FIG. 4A and 4B are schematic diagrams, as viewed from above mobile body 10, of the relationship between the direction of travel of mobile body 10 and the direction of a wave propagating from broadcast tower 11; FIG. 4A showing the situation existing when the direction of travel of mobile body 10 is perpendicular to the direction of the propagating wave, and FIG. 4B showing the situation existing when the direction of travel of mobile body 10 is parallel to the direction of the propagating wave.

Note that while receiving antenna array 2 is, for reasons of simplification of the drawings, depicted as being made up of four receiving antennas, the present invention is not limited to constitutions in which there are four thereof.

For example as shown at FIG. 4A, when the direction in which mobile body 10 moves is perpendicular to the direction of the propagating wave from broadcast tower 11, because the mounted orientation of receiving antenna array 2 is perpendicular to the direction of travel of mobile body 10, the respective receiving antennas of receiving antenna array 2 will be oriented such that they are parallel to the direction of the propagating wave. As explained above, Doppler shifting of the propagating wave does not occur at such time.

Respective receiving antenna(s) of receiving antenna array 2 are therefore employed in such manner as to achieve optimum reception.

To wit, information processing circuit 6 (see FIG. 1) sends control signal(s) to switch array 3 (see FIG. 1) so as to cause connection and supply of electrical power to be simultaneously made with respect to all receiving antennas, monitors signal strength at respective receiving antennas, and selects receiving antenna(s) having highest signal strength(s), which is/are then used in carrying out reception. This makes it possible to carry out optimum reception through use of a technique similar to the diversity technique of the conventional art.

Conversely as shown at FIG. 4B, when the direction in which mobile body 10 moves is parallel to the direction of the propagating wave from broadcast tower 11, because the mounted orientation of receiving antenna array 2 is perpendicular to the direction of travel of mobile body 10, the respective receiving antennas of receiving antenna array 2 will be oriented such that they are perpendicular to the direction of the propagating wave.

As explained above, Doppler shifting of the propagating wave does occur at such time. The speed of the mobile body causes interference to occur between subchannels that are adjacent in the frequency domain, disturbing intercarrier orthogonality and leading to deterioration in transmission characteristics. Where this occurs to marked extent, reception may be difficult.

In order to avoid being affected by Doppler shifting, information processing circuit 6 therefore alters the control signal(s) sent to switch array 3. To wit, as a result of such alteration, connection and supply of electrical power are made with respect to only one receiving antenna, the receiving antenna actually used for reception being switched one at a time in order and with such timing, in correspondence to the speed at which mobile body 10 moves as detected by speed sensor 5 (see FIG. 1) and also taking into consideration the pitch with which the respective receiving antennas are arranged, as to cause the positional relationship between broadcast tower 11 and the receiving antenna which is in use to be substantially mutually stationary, relatively speaking. By so doing, it is possible to achieve a situation that is substantially the same as if reception were carried out using a receiving antenna that is stationary with respect to broadcast tower 11, making it possible to prevent occurrence of Doppler shifting.

Moreover, it is sufficient that the state in which the positional relationship between broadcast tower 11 and the receiving antenna which is in use are substantially mutually stationary, relatively speaking, be maintained for the time required to receive signal(s) corresponding to one symbol period.

Furthermore as shown at FIG. 4B, when the mobile body 10 is receding from broadcast tower 11, the receiving antenna which is located farthest from broadcast tower 11 (the frontmostly disposed receiving antenna at mobile body 10) is initially selected, and switching is sequentially carried out therefrom to receiving antenna(s) located nearer to broadcast tower 11 (rearwardly disposed receiving antenna(s) at mobile body 10) in correspondence to the speed at which mobile body 10 is moving.

Conversely, when the mobile body 10 is approaching broadcast tower 11, the receiving antenna which is located nearest to broadcast tower 11 (the frontmostly disposed receiving antenna at mobile body 10) is initially selected, and switching is sequentially carried out therefrom to receiving antenna(s) located farther from broadcast tower 11 (rearwardly disposed receiving antenna(s) at mobile body 10) in correspondence to the speed at which mobile body 10 is moving.

During actual use of antenna apparatus 1 in accordance with the present invention, the relationship between the direction in which mobile body 10 moves and the direction of the wave propagating from broadcast tower 11 is not limited to the two alternatives "parallel" and "perpendicular," but will most often be intermediate therebetween.

During the aforementioned vector difference calculation, a vector difference reference value is therefore established for making determination of parallel or perpendicular. A reference value might, for example, be established for deeming that such relationship is perpendicular even when not exactly perpendicular, provided that the difference is within a prescribed angle from the perpendicular state. Moreover, depending upon whether the calculated vector difference is within the reference value range, selection might be made of either the aforementioned technique similar to the diversity technique or the technique in which receiving antennas are switched one at a time in order and with such timing as to cause the positional relationship between broadcast tower 11 and the receiving antenna which is in use to be substantially mutually stationary, relatively speaking.

MANNER OF FORMING APPARATUS AND INSTALLATION

The respective receiving antennas making up receiving antenna array 2 of the foregoing antenna apparatus 1 in accordance with the present invention may be formed using metal and/or other such electrically conductive material(s).

Furthermore, information processing circuit 6 and/or switch array 3 described with reference to FIG. 1 may be constituted using thin film transistor(s) (TFT), such TFT(s) being formed using continuous-grain silicon (CG silicon) technology such as that indicated for example at Japanese Patent Application Publication Kokai No. H7-161634 (1995), and/or polysilicon and/or other such crystalline silicon technology.

Directional sensor 4 may be constituted from silicon semiconductor element(s) using technology such as that indicated for example at Japanese Patent Application Publication Kokai No. H9-329655 (1997); and/or may, as with information processing circuit 6 and/or switch array 3, be constituted using thin film transistor(s) (TFT), such TFT(s) being formed using CG silicon technology such as that indicated for example at Japanese Patent Application Publication Kokai No. H7-161634 (1995), and/or polysilicon and/or other such crystalline silicon technology.

Accordingly, receiving antenna array 2, switch array 3, and directional sensor 4 are capable of being formed on glass, plastic, or a metal substrate. For example, where antenna apparatus(es) in accordance with the present invention is/are to be installed in an automobile, all or any portion of receiving antenna array 2, switch array 3, and/or directional sensor 4 may be formed on the windshield and/or rear window(s) of the automobile.

By so doing it will be possible to form all or any portion of receiving antenna(s) and/or respective circuit(s) and/or the like in integral fashion, facilitating attachment of component(s) and/or antenna apparatus(es) to a mobile body and/or facilitating the manner in which connection(s) is/are made to component(s).

While the foregoing description has been carried out in terms of an embodiment in which the present invention is applied to a terrestrial digital broadcast receiving antenna array apparatus for a mobile body, the present invention is not limited to terrestrial digital broadcasts but may additionally or alternatively be applied to antenna apparatus(es) for OFDM broadcasts and/or broadcasts compliant therewith. Furthermore, antenna apparatus(es) in accordance with the present invention may be installed in electronic equipment intended for a mobile body.

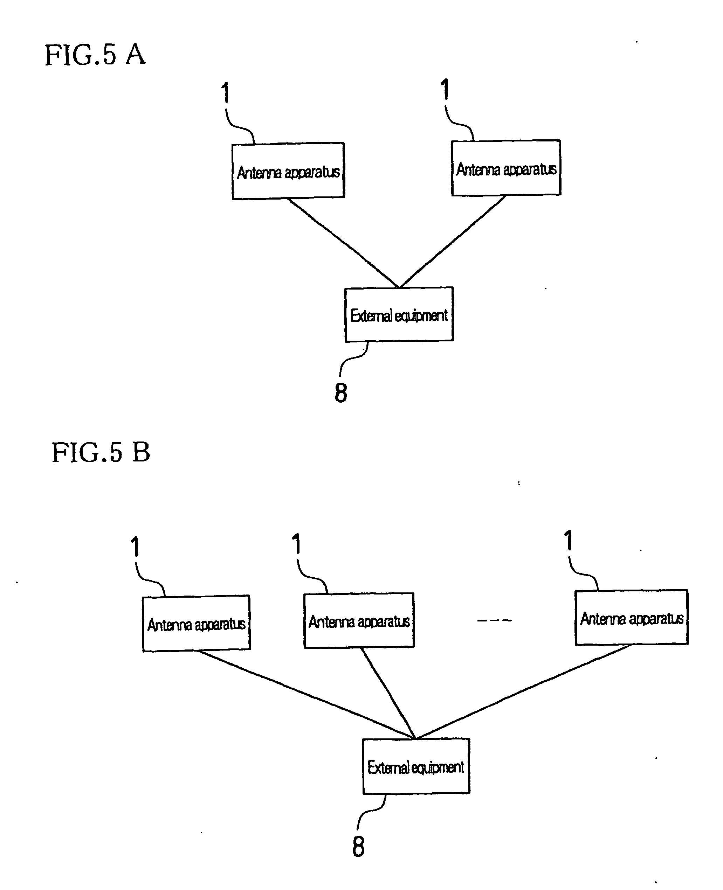

FIG. 5A and FIG. 5B are block diagrams showing the schematic constitution of other embodiments of the present invention; FIG. 5A showing a situation in which two antenna apparatuses 1 are connected to external equipment 8, and FIG. 5B showing a situation in which a plurality of antenna apparatuses 1 are connected to external equipment 8.

The present invention is not limited to use of only a single antenna apparatus, it being possible to use a plurality thereof as required. For example, it can be imagined as shown at FIG. 5A that two antenna apparatuses 1 might be connected to external equipment 8, the respective antenna apparatuses being installed at different locations, and/or being installed so as to face in different directions, and/or the like. Furthermore, it can be imagined as shown at FIG. 5B that a plurality of antenna apparatuses 1 might be connected to external equipment 8, such antenna apparatuses being employed in different ways, under different circumstances, and/or the like.

## Claims

1. An antenna apparatus (1) installed at a mobile body(10), the antenna apparatus (1) comprising:
a plurality of receiving antennas (2);
an antenna switching means (3) for switching each of the plurality of receiving antennas(2) between a connected state and a disconnected state respectively; and
an information processing circuit (6) calculating
the direction in which, and the speed at which, the mobile body (10) moves relative to the direction of propagation of at least one propagating wave of at least one received signal, and controlling switching by the antenna switching means (3) in correspondence to the results of that calculation.

2. An antenna apparatus (1) according to claim 1 wherein:
the plurality of receiving antennas (2) is such that the receiving antennas (2) are arranged so as to be respectively parallel and evenly spaced apart.

3. An antenna apparatus (1) according to claim 1 wherein:
the antenna switching means (3) supplies electrical power to the receiving antenna or antennas each of which is switched to a connected state by the information processing circuit (6).

4. An antenna apparatus (1) according to claim 1 wherein:
the antenna switching means (3) simultaneously switches one or more of the receiving antennas (2) to a connected state respectively in accordance with controlling by the information processing circuit (6).

5. An antenna apparatus (1) according to claim 1 wherein:
the difference between the direction in which the mobile body (10) moves and the direction of propagation of at least one of the propagating wave or waves is detected based on transmitter position information for at least one of the propagating wave or waves and current position information for the mobile body (10).

6. An antenna apparatus (1) according to claim 1 wherein:
at least one antenna switching technique employed by the information processing circuit (6) is altered in correspondence to whether the difference between the direction in which the mobile body (10) moves and the direction of propagation of at least one of the propagating wave or waves is within at least one prescribed range.

7. An antenna apparatus (1) according to claim 1 wherein:
at least one antenna switching rate at the information processing circuit (6) is controlled in correspondence to the direction of the mobile body (10) in the direction of propagation of at least one of the propagating wave or waves.

8. An antenna apparatus (1) according to claim 7 wherein:
at least one antenna switching rate at the information processing circuit (6) is controlled so as to be at least one switching rate such as will cause the connected receiving antenna or antennas to be substantially stationary relative to at least one source of transmission of at least one of the propagating wave or waves.

9. An antenna apparatus (1) according to claim 1 wherein:
the plurality of receiving antennas (2) and the antenna switching means(3) are formed in integrated circuit fashion.

10. An antenna apparatus (1) according to claim 1 wherein:
the plurality of receiving antennas (2) and the information processing circuit (6) are formed in integrated circuit fashion.

11. An antenna apparatus(1) according to claim 1 wherein:
the antenna switching means(3) and the information processing circuit (6) are formed in integrated circuit fashion.

12. An antenna apparatus(1) according to claim 1 wherein:
the plurality of receiving antennas(2), the antenna switching means(3), and the information processing circuit (6) are formed in integrated circuit fashion.

13. An antenna apparatus(1) according to any one of claims 9 through 12 wherein:
at least one continuous-grain silicon process is employed as at least one means for carrying out the forming in integrated circuit fashion.

14. An antenna apparatus(1) according to claim 1 wherein:
the antenna apparatus(1) is capable of being used to receive one or more signals employing orthogonal frequency division multiplexing.

15. Electronic equipment provided with one or more antenna apparatuses(1) according to any one of claims 1 through 14.

## Patentansprüche

1. Antennenanordnung (1), installiert an einem mobilen Gehäuse (10), wobei die Antennenanordnung (1) umfasst:
eine Mehrzahl von Empfangsantennen (2);
Antennenschaltmittel (3) zum Schalten jeder der Mehrzahl von Empfangsantennen (2) zwischen einem angeschlossenen bzw. einem nicht angeschlossenen Zustand; und
einer Datenverarbeitungsschaltung (6), die die Richtung und die Geschwindigkeit berechnet, in die bzw. mit der sich das mobile Gehäuse (10) relativ zur Ausbreitungsrichtung mindestens einer Ausbreitungswelle von mindestens einem empfangenen Signal bewegt, und die das Schalten durch die Antennenschaltmittel (3) entsprechend der Ergebnisse dieser Berechnung steuert.

2. Antennenanordnung (1) nach Anspruch 1, wobei die Mehrzahl von Empfangsantennen (2) derart ist, dass die Empfangsantennen (2) parallel zueinander und gleichmäßig beabstandet angeordnet sind.

3. Antennenanordnung (1) nach Anspruch 1, wobei die Antennenschaltmittel (3) die Empfangsantenne oder -antennen mit Strom versorgen, von denen jede durch die Datenverarbeitungsschaltung (6) in einen angeschlossenen Zustand geschaltet wird.

4. Antennenanordnung (1) nach Anspruch 1, wobei die Antennenschaltmittel (3) gleichzeitig eine oder mehrere der Empfangsantennen (2) in einen angeschlossenen Zustand jeweils gemäß der Steuerung durch die Datenverarbeitungsschaltung (6) schalten.

5. Antennenanordnung (1) nach Anspruch 1, wobei der Unterschied zwischen der Richtung, in die sich das mobile Gehäuse (10) bewegt und der Ausbreitungsrichtung mindestens einer der Ausbreitungswelle oder - wellen basierend auf Senderpositionsdaten für mindestens eine der Ausbreitungswelle oder -wellen und der momentanen Positionsdaten des mobilen Gehäuses (10) ermittelt wird.

6. Antennenanordnung (1) nach Anspruch 1, wobei mindestens eine Antennenspaltungstechnik, die von der Datenverarbeitungsschaltung (6) verwendet wird, entsprechend danach geändert wird, ob der Unterschied zwischen der Richtung, in der sich das mobile Gehäuse (10) bewegt und der Ausbreitungsrichtung mindestens einer der Ausbreitungswelle oder - wellen innerhalb mindestens eines vorgeschriebenen Bereiches liegt.

7. Antennenanordnung (1) nach Anspruch 1, wobei mindestens eine Antennenschaltungsrate in der Datenverarbeitungsschaltung (6) entsprechend der Richtung des mobilen Gehäuses (10) in der Ausbreitungsrichtung mindestens einer der Ausbreitungswelle oder -wellen gesteuert wird.

8. Antennenanordnung (1) nach Anspruch 7, wobei mindestens eine Antennenschaltungsrate in der Datenverarbeitungsschaltung (6) so gesteuert ist, dass sie mindestens eine Schaltungsrate derart darstellt, die dazu führt, dass die angeschlossene Empfangsantenne oder -antennen im Wesentlichen stationär bezogen auf mindestens eine Sendequelle der mindestens einen Ausbreitungswelle oder -wellen ist.

9. Antennenanordnung (1) nach Anspruch 1, wobei die Mehrzahl von Empfangsantennen (2) und die Antennenschaltmitteln (3) in Form einer integrierten Schaltung ausgebildet sind.

10. Antennenanordnung (1) nach Anspruch 1, wobei die Mehrzahl von Empfangsantennen (2) und die Datenverarbeitungsschaltung (6) in Form einer integrierten Schaltung ausgebildet sind.

11. Antennenanordnung (1) nach Anspruch 1, wobei die Antennenschaltmittel (3) und die Datenverarbeitungsschaltung (6) in Form einer integrierten Schaltung ausgebildet sind.

12. Antennenanordnung (1) nach Anspruch 1, wobei die Mehrzahl von Empfangsantennen (2), die Antennenschaltmittel (3) und die Datenverarbeitungsschaltung (6) in Form einer integrierten Schaltung ausgebildet sind.

13. Antennenanordnung (1) nach einem der Ansprüche 9 bis 12, wobei mindestens eine Verarbeitung nach Continous-Grain-Silicon-Technologie als mindestens ein Mittel zum Ausführen der Bildung der integrierten Schaltung verwendet wird.

14. Antennenanordnung (1) nach Anspruch 1, wobei die Antennenanordung (1) geeignet ist, verwendet zu werden, um ein oder mehrere Signale zu empfangen, die das OFDM- (orthogonal frequency division multiplexing) Mehrträgerverfahren verwenden.

15. Elektronisches Gerät, das mit einer oder mehreren Antennenanordnungen (1) nach einem der Ansprüche 1 bis 14 versehen ist.

## Revendications

1. Dispositif d'antenne (1) installé sur un corps mobile (10), le dispositif d'antenne comprenant :
une pluralité d'antennes réceptrices (2) ;
un dispositif de commutation d'antenne (3) pour commuter chacune des antennes réceptrices (2) d'un état connecté à un état déconnecté respectivement ; et
un circuit de traitement de l'information (6) calculant la direction dans laquelle, et la vitesse à laquelle, le corps mobile (10) se déplace par rapport à la direction de propagation d'au moins une onde de propagation d'au moins un signal reçu, et contrôlant la commutation par le dispositif de commutation de l'antenne (3) en correspondance avec les résultats de ce calcul.

2. Dispositif d'antenne (1) selon la revendication 1 dans lequel :
la pluralité d'antennes réceptrices (2) est telle que les antennes réceptrices (2) sont arrangées pour être respectivement parallèles et à intervalles espacées uniformément.

3. Dispositif d'antenne (1) selon la revendication 1 dans lequel :
le dispositif de commutation d'antenne (3) amène du courant électrique à l'antenne ou aux antennes réceptrice(s), chacune étant commutée en un état connecté par le circuit de traitement de l'information (6).

4. Dispositif d'antenne (1) selon la revendication 1 dans lequel :
le dispositif de commutation d'antenne commute simultanément une ou plusieurs des antennes réceptrices (2) en un état connecté respectivement selon le contrôle par le
circuit de traitement de l'information.

5. Dispositif d'antenne (1) selon la revendication 1 dans lequel :
la différence entre la direction dans laquelle le corps mobile (10) se déplace et la direction de propagation d'au moins une onde ou des ondes de propagation est détectée par rapport à l'information de la position du transmetteur pour au moins une onde ou des ondes de propagation et l'information de position courante du corps mobile (10).

6. Dispositif d'antenne (1) selon la revendication 1, dans lequel :
au moins une technique de commutation d'antenne employée par le circuit de traitement de l'information (6) est altérée conformément avec le fait que la différence entre la direction dans laquelle se déplace le corps mobile (10) et la direction de propagation d'au moins une onde ou des ondes de propagation est dans une plage prescrite.

7. Dispositif d'antenne (1) selon la revendication 1, dans lequel :
au moins une vitesse de commutation d'antenne du circuit de traitement de l'information (6) est contrôlée conformément à la direction du corps mobile (10), dans la direction de propagation d'au moins une onde ou des ondes de propagation.

8. Dispositif d'antenne (1) selon la revendication 7, dans lequel :
au moins une vitesse de commutation d'antenne du circuit de traitement de l'information (6) est contrôlée de façon à être au moins une vitesse de commutation de manière telle qu'elle va obliger l'antenne ou les antennes émettrice(s) connectée(s) à être sensiblement stationnaire(s) par rapport à au moins une source de transmission d'au moins une onde ou des ondes de propagation.

9. Dispositif d'antenne (1) selon la revendication 1, dans lequel :
la pluralité des antennes réceptrices (2) et les moyens de commutation d'antenne (3) sont constitués sous la forme d'un modèle de circuit intégré.

10. Dispositif d'antenne (1) selon la revendication 1, dans lequel :
la pluralité des antennes réceptrices (2) et le circuit de traitement de l'information (6) sont constitués sous la forme d'un modèle de circuit intégré.

11. Dispositif d'antenne (1) selon la revendication 1, dans
les moyens de commutation d'antenne (3) et le circuit de traitement de l'information (6) sont constitués sous la forme d'un modèle de circuit intégré.

12. Dispositif d'antenne (1) selon la revendication 1, dans lequel :
la pluralité des antennes réceptrices (2), les moyens de commutation d'antenne (3), et le circuit de traitement de l'information (6) sont constitués sous la forme d'un modèle de circuit intégré.

13. Dispositif d'antenne (1) selon l'une quelconque des revendications 9 à 12, dans lequel :
au moins un procédé de silicium à grain continu est employé en tant qu'au moins un moyen pour effectuer la formation en modèle de circuit intégré.

14. Dispositif d'antenne (1) selon la revendication 1, dans lequel :
l'appareil d'antenne (1) est capable d'être utilisé pour recevoir un ou plusieurs signal(signaux) employant le multiplexage par division de la fréquence orthogonale.

15. Equipement électronique proposé avec un ou plusieurs dispositif(s) d'antenne (1) selon l'une quelconque des revendications 1 à 14.
